# EUROPEAN PATENT SPECIFICATION

(11) **EP 1 668 837 B1**
(45) Date of publication and mention of the grant of the patent: **14.08.2013**
(21) Application number: 04788485.3
(22) Date of filing: 21.09.2004
(51) Int. Cl.: H04L 12/18, H04L 12/28

(54) **MULTICAST STREAMING SERVICE METHOD AND SYSTEM THEREOF**
MULTICAST-STREAMING-DIENSTVERFAHREN UND SYSTEM DAFÜR
PROCEDE ET SYSTEME ASSOCIES A UN SERVICE DE TRANSMISSION EN CONTINU MULTIDIFFUSION

(30) Priority: 22.09.2003 KR 2003065676
(43) Date of publication of application: 14.06.2006
(73) Proprietor: LG Electronics, Inc., Seoul 150-010 (KR)
(72) Inventor: KIM, Chang-Hyun, Anseong, Gyeonggi-Do, 456-893 (KR); IM, Hyo-Jun, Yangcheon-Gu, Seoul, 158-076 (KR)
(74) Representative: Cabinet Plasseraud
(86) International application number: PCT/KR2004/002422
(87) International publication number: WO 2005/029779

(56) References cited:
- WO-A1-03/003658
- WO-A2-01/01632
- WO-A2-03/019864
- US-A1- 2003 023 894
- US-A1- 2003 163 528
- RITCHIE J ET AL: "UPnP AV Architecture: 0.83" DESIGN DOCUMENT MICROSOFT, 12 June 2002 (2002-06-12), pages 1-22, XP002271673

## Description

### TECHNICAL FIELD

The present invention relates to a home networking service, and more particularly to, a multicast streaming service and system in the UPnP™ technology.

### BACKGROUND ART

Recently, with the distribution of very high speed internet and the digitization of home electric appliances, there is being made an attempt to configure PCs (personal computers), network gateway apparatuses, audio/video devices, home electronic equipment, control devices, etc. at home as a single home network.

Currently, as a PC-based network environment has been changing more and more into an environment employing a variety of subnetwork techniques with the spread of home networking, there has been suggested Universal Plug and Play (UPnP) technology with the need for a technique capable of networking home electric appliances in an independent and unified way using an IP protocol.

The aforementioned UPnP is defined by the protocol of a standard network architecture, which is one of the leading standard techniques for home networks being made by establishing a UPnP forum between a number of companies of in countries around the world. The above UPnP-based home network system is comprised of multiple UPnP devices providing services and a control point (CP) controlling the multiple UPnP devices.

The control point (CP) denotes a controller having the function of sensing and controlling a variety of devices. That is, the control point (CP), as the controller controlling a variety of devices (for example, UPnP devices), discovers various kinds of UPnP devices, finds out the descriptions of the discovered UPnP devices and controls the UPnP devices according to a user's key input.

The UPnP devices include PCs (personal computers), network equipment, peripheral devices, such as a printer, audio/video devices, home electric equipment, etc. which are all connected to a home network. They inform the control point of their event.

The current UPnP-based home network system controlling audio/video devices comprises: a media server MS providing media contents via a home network; a media renderer MR playing media contents provided via the home network; and a control point CP controlling the media server MS and the media renderer MR.

The control point CP is informed of the status information of the media server MS and of the media renderer MR through an event. For instance, when the media server MS and the media renderer MR provide AV(audio/video) transport service and rendering control service, a changed state variable is put into a state variable table named 'Last Change' and the control point CP is informed of the changed state variable, to thus enable the control point CP to know the current state of a device.

The media server MS informs the control point CP of the information on the media contents whenever an UPnP action occurs. Further, the media server MS transmits the corresponding media contents to the media renderer MR by a streaming method in order to play the media contents.

The media renderer MR plays the transmitted media contents. At this time, although the above streaming method can be any of various methods suggested, the current UPnP Audio/Video V standard uses 'Out-of Band transfer protocol' for streaming.

For example, RTSP (real-time streaming protocol)-RTP(real time transport protocol) may be used for transmitting contents. In case of a program using RTSP-RTP, contents are sent using RTP over UDP (User Datagram Protocol). At this time, in order to view the contents sent from the media server MS, each client has to join a RTSP session and then leave. To manage this, a RTSP server is operated.

Therefore, a RTSP-RTP player is able to join the RTSP session by using an address informed by the RTSP server, and once the RTSP-RTP player join the RTSP session, it becomes capable of playing the contents being sent from the server using RTP.

In the conventional UPnP AV standards, however, the media renderer is operated based on the concept that one media renderer plays one content sent from the media server. But in case that the media server receives a TV signal and sends it to the media renderer, you might want to see the same channel on a number of displays simultaneously.

Moreover, let us suppose that a monitoring camera exists in a house and Images taken by the camera are stored in a server at real time. In this case, a member of the house might want to look at something happening In front of the house at the same time.

Besides, in case where the person having watched the TV In the living room moves to another place, when TV contents are sent by multicasting, another media renderer in the another place joins the multicast group, thereby making him or her not to miss but watch the program he or she watched a little while ago.

To realize the aforementioned scenarios, the UPnP AV device must be able to send contents to the multicast group, and to joint and leave the multicast group.

However, In the conventional UPnP AV standards, only the circumstances of establishing a connection between the media server and the media renderer and transmitting media data are taken into consideration thus In case of sending and receiving contents to/from a multicast group, this cannot be controlled effectively. That is, in the conventional UPnP AV standards, a multicast model Is not taken Into consideration, thus this makes it difficult to realize a multicast streaming service.
In some known prior art, US 2003/023894, for instance, describes a multicasting system and method of a network for providing personalized content to remote users of the network having different bandwidths. The personalized content Includes Internet and World Wide Web (WWW) content. In general, this allows the user to communicate within a network utilizing a multicast design and the host establishes group membership for the multicast group and then establishes an individualized set of broadcast criteria.
Further, US 2003/163528 describes a system and a process for a session layer protocol which allows a large number of client machines to receive a reliable data stream over inherently unreliable multicast connections. More specifically, the streaming allows for the source to Instruct Individuals to drop their connection to the stream to prevent noisy Individuals from disrupting the operation of the stream.

### DISCLOSURE OF THE INVENTION

Therefore, an object of the present Invention is to provide a multicast streaming service method and system which are devised to enable an efficient control of multicast streaming on an UPnP by defining actions such as MulticastSTart(), Join() and Leave() in order to enable a multicast service by UPnP AV standards.

To achieve the above abject, there Is provided a multicast streaming service method as set out in Claim 1. A system according to claim 8 Is also provided. Preferred embodiments are defined In claims 2-7 and 9-14.

### BRIEF DESCRIPTION OF THE DRAWINGS

The accompanying drawings, which are included to provide a further understanding of the invention and are Incorporated In and constitute a part of this specification, illustrate embodiments of the invention and together with the description serve to explain the principles of the invention.

In the drawings:
Fig. 1 is a signal flow chart showing a multicast service process according to an embodiment of the present invention;
Figs. 2 and 3 are operating sequence charts showing a multicast transmission/reception process according to the embodiment of the present invention; and
Figs. 4 to 7 are exemplified views showing additional actions for a multicast service according to the embodiment of the present invention.

### MODES FOR CARRYING OUT THE PREFERRED EMBODIMENTS

In a preferred embodiment of the present invention, UPnP actions required for transmitting/receiving multicast data on an UPnP will be defined and the procedure of performing multicast transmission and reception using these actions will be described.

In a multicast model of an IP according to the embodiment of the present invention, a media server MS transmits data to a specific multicast address, and a client wanting to receive the data, i.e., a media renderer MR, subscribes to the corresponding multicast address.

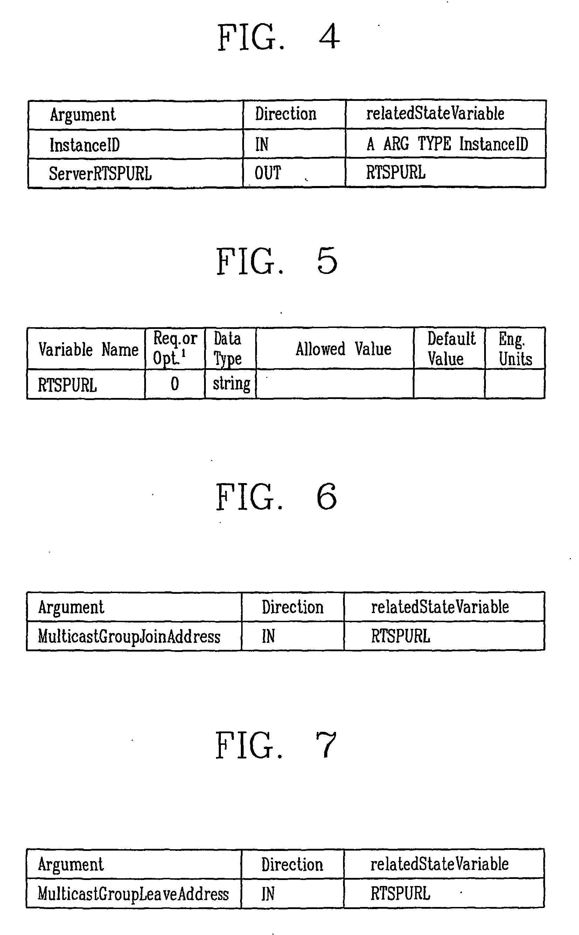

To adapt the multicast model to a UPnP, as shown in Figs. 4 to 7, UPnP actions such as MulticastStart(), Join() and Leave(), are introduced.

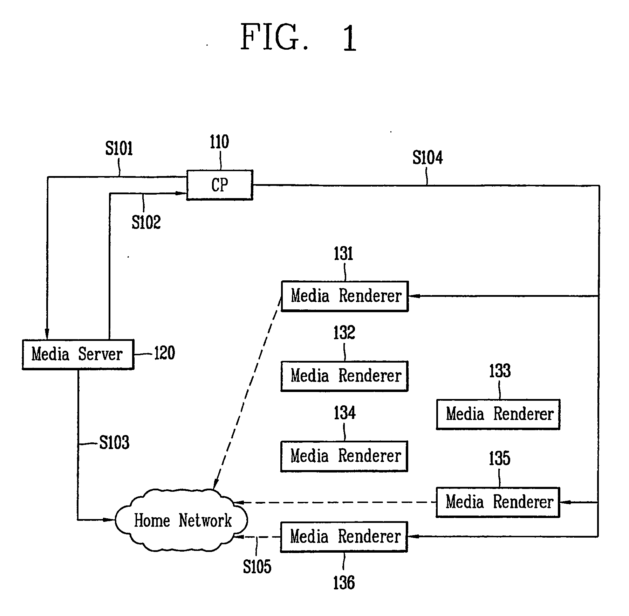

Fig. 1 is a signal flow chart according to an embodiment of the present invention.

As shown in Fig. 1, a multicast streaming service method comprises the steps in which: a control point 110 invokes 'MulticastStart()' action to a media server 120 to request for the transmission of designated contents to a multicast address S101; the media server 120 delivers a RTSP URL (RTSP server address), which is to be accessed for receiving the corresponding contents, to the control point 110 in response to 'MultlcastStart()' action S102; the media server 120 transmits the corresponding contents to the multicast address using RTP S103; the control point 110 informs multiple media renderers 131 to 136 wanting to join a multicast group of the RTSP URL by using 'Joint()' action S104; and one of the media renderers 131 to 136 wanting to joint the multicast group accesses to a RTSP server of the media server 120 using the RTSP URL, acquires the properties of media data being transmitted and the multicast address and then receives multicast data using the acquired information S105. Here, the RTSP URL can be represented in the form of rtsp://ipaddress/path.

Further, the aforementioned method comprises the step in which the control point 110 invokes 'Leave()' action of the one of the media renderers 131 to 136 having joined the multicast group in order to stop the data reception of the corresponding media renderer.

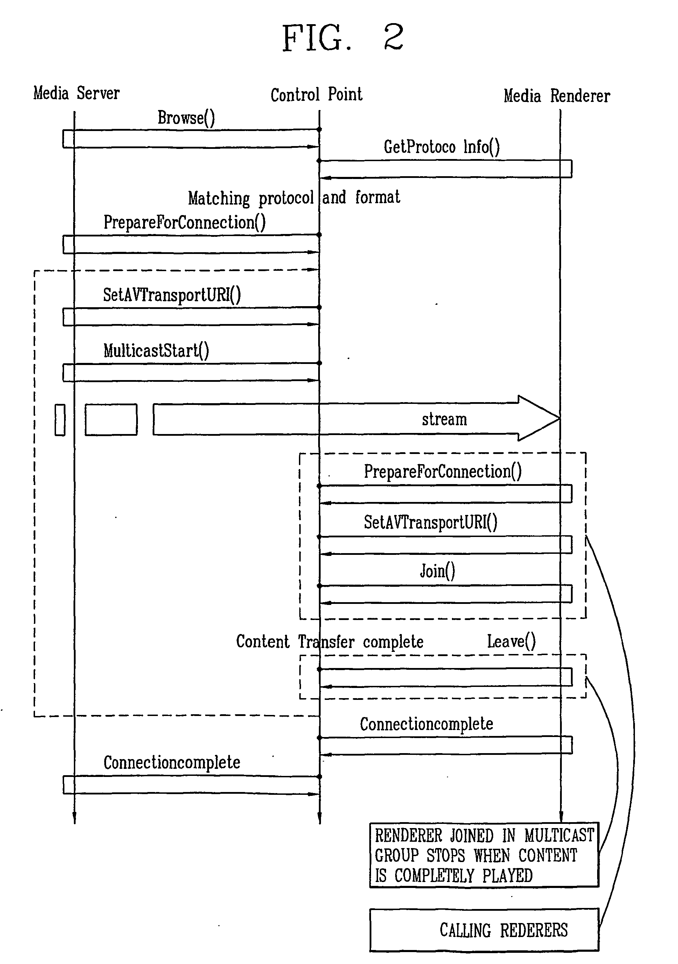

In the embodiment of the present invention thus configured, the process of playing contents in a media renderer using multicasting is the same as shown in the operating sequence chart of Fig. 2, which will be described as follows.

First, the control point 110 selects given contents through 'Browse()' action and checks whether the media renderers 131 to 136 are able to play contents through 'GetProtocollnfo()' action.

The control point 110 invokes 'MulticastStart()' action if the media server 120 can provide the multicast function to push contents. At this time, upon the 'MulticastStart()' action, as shown in Figs. 4 and 5, the media server 120 provides ObjectID as an input parameter and RTSP URL used for joining the multicast group as an output parameter.

Afterwards, the media server 120 delivers the RTSP URL, which is to be accessed for receiving the corresponding contents, to the control point 110 in response to 'MulticastStart()' action. The RTSP URL is in the form of rtsp://ipaddress/path.

Afterwards, the media server 120 starts contents transmission using RTP as a multicast address. At this time, the control point 110 informs a plurality of media renderers 131 to 136 wanting to play the contents of the RTSP URL provided from the media server 120 through 'SetAVTranspartURI' action.

Accordingly, one of the media renderers 131 to 136 wanting to join the multicast group directly requests a RTSP server existing in the media server 120 to create a session.

Consequently, the media renderer having joined the multicast group allows a user to watch the corresponding contents by playing the contents being sent from the media server 120.

Afterwards, in order to leave the multicast group, the corresponding media renderer uses 'Leave()' action received from the control point 110.

If the user wants to view the existing contents again after the contents are over, the user has to rejoin the multicast group after leaving the multicast group.

In such a general case, the play function can be used again once the contents are finished. In other words, in case the same contents are played again, depending on a vendor, the session of the media renderer that joined the multicast group before may be kept as it is.

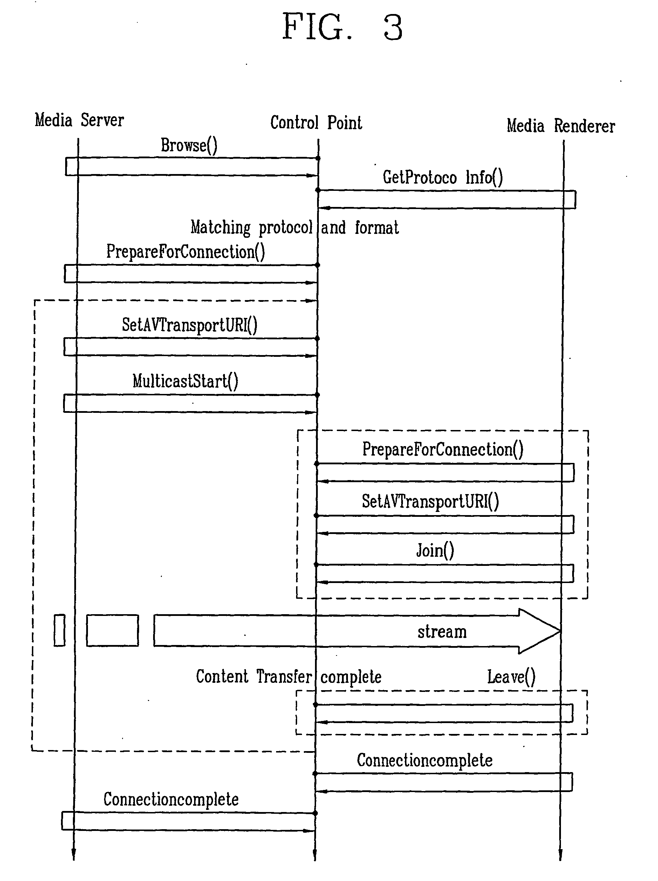

Meanwhile, in the embodiment of the present invention, the media renderer can be embodied so as to perform the process as shown in the operating sequence chart of Fig. 3, so that the multicast contents can meet the multicast time of the media server by delaying contents multicasting.

In case of transmitting and receiving multicast data by the process of Fig. 2 suggested in the embodiment of the present invention, since there exits a gap between the point of time when the media server 120 starts data transmission and the point of time when the one of the media renderers 131 to 136 having joined the multicast group starts data reception, the corresponding media renderer might not be able to play the first portion of the contents being currently transmitted.

.Therefore, to solve the above problem, the media server 120 is configured to start streaming when the media renderer accesses via the RTSP server for the first time, rather than starting contents transmission as soon as it receives 'MuiticastStart()' action.

That is, in the operating process of Fig. 3 explained briefly in Fig. 1 as follows, the media server 120 is configured to perform the process in which the control point 110' informs the media renderers 131 to 136 of the RTSP URL to be multicasted before starting the multicasting of contents.

Subsequently, the one of the media renderers 131 to 136 having joined the multicast group is able to play the first portion of the contents (for example, the first beginning portion of a specific movie) being transmitted from the media server 120 without missing it.

As described above in detail, the present invention provides the effect of reducing the load of a network since multiple renderers are able to simultaneously receive media data by one streaming connection by using multicasting so that the multiple media renderers MR can simultaneously watch the same contents provided from the media server MS.

## Claims

1. A multicast streaming service method, in a UPnP AV network control method of performing a streaming transmission for playing media by having a media server MS (120), multiple media renderers MR (131, 132, 133, 134, 135, 136) and a control point CP (110) controlling the media server (120) and the renderers (131, 132, 133, 134, 135, 136), comprising establishing a connection between the media server and the media renderers and transmitting media data, **characterized in that** the method comprises the steps in which:
the control point (110) confirms contents and invokes a multicast streaming start action to the media server (120);
the media server (120) informs the control point (110) of a multicast group address for receiving the corresponding contents;
the control point (110) informs the multiple media renderers (131-136) of the multicast group address; and
the multiple media renderers (131-136) join the multicast group address, confirm the multicast address and receive the corresponding contents.

2. The method of claim 1, comprising the step in which the media server (120) starts the multicast streaming of the contents before the control point (110) informs the multiple media renderers (131-136) of the multicast group address.

3. The method of claim 1, comprising the step in which the media server (120) starts the multicast streaming of the corresponding contents after a lapse of a predetermined time after informing the control point (110) of the multicast group address so that the multiple media renderers (131-136) can confirm the multicast group address and then receive the corresponding contents from the control point (110).

4. The method of claims 1, 2 and 3, wherein the multicast group address is a RTSP URL, the RTSP URL being in the form of rtsp://ipaddress/path.

5. The method of claim 1, comprising the step of finishing the reception of multicast contents if 'Leave()' action invoking is recognized.

6. The multicast streaming service method of claim 1, further comprising the step of informing of a multicast group address if multicast start action is recognized and multicast streaming corresponding contents to the multicast address using a RTSP server.

7. The multicast streaming service method of claim 1, having multiple media renderers MR (131-136), further comprising the steps in which:
the multiple media renderers confirm if contents are multicast or not;
receiving a multicast group address if the presence of multicasting is confirmed ; and
joining the multicast group address, confirming the multicast address and receiving the corresponding multicast contents.

8. A multicast streaming service system, comprising a media server for establishing connection with a multiple media renderer and for transmitting media data and a multiple media renderer for receiving media data from the media server, **characterised in that** the streaming service system comprises:
a media server MS (120) configured for providing a multicast group address and for multicasting corresponding contents to a multicast address using a RTSP server;
multiple media renderers MR (131-136) configured for joining the RTSP server to confirm the multicast address and for playing the contents transmitted to the multicast address; and
a control point CP (110) configured for confirming the contents to be multicast, for invoking a multicast start action to the media server (120) and for informing the multiple media renderers (131-136) of the multicast group address provided from the media server (120).

9. The system of claim 8, wherein the media server (120) is arranged to start multicasting of the corresponding contents right after transmission of the multicast group address to the control point (110).

10. The system of claim 8, wherein the media server (120) is arranged to start multicasting of the corresponding contents after a lapse of a predetermined time since the transmission of the multicast group address.

11. The system of claims 8, 9 and 10, wherein the multicast group address is a RTSP URL, the RTSP URL being in the form of rtsp://ipaddress/path.

12. The multicast streaming service system of claim 8, comprising a media server configured to inform of a multicast group address if multicast start action is recognized and multicast-streaming corresponding contents to the multicast address using a RTSP server.

13. The multicast streaming service system of claim 8, comprising multiple media renderers configured for receiving a multicast group address if the presence of multicasting is confirmed, for joining the multicast group address, for confirming the multicast address and for receiving the corresponding multicast contents.

14. The multicast streaming service system of claim 13, wherein the multiple renderers are arranged to finish the reception of multicast contents if 'Leave ()' action invoking is recognized.

## Patentansprüche

1. Multicast-Streaming-Dienstverfahren in einem UPnP-AV-Netzwerksteuerverfahren zum Durchführen einer Streaming-Übertragung zum Abspielen von Medien, indem es einen Media-Server (120), mehrere Media-Renderer MR (131, 132, 133, 134, 135, 136) und einen Steuerpunkt CP (110), der den Media-Server (120) und die Renderer (131, 132, 133, 134, 135, 136) steuert, hat, welches das Herstellen einer Verbindung zwischen dem Media-Server und den Media-Renderern und das Übertragen von Media-Daten aufweist, **dadurch gekennzeichnet, dass** das Verfahren die Schritte aufweist, wobei:
der Steuerpunkt (110) Inhalte bestätigt und eine Multicast-Streaming-Startaktion zu dem Media-Server (120) aktiviert;
der Media-Server (120) den Steuerpunkt (110) über eine Multicast-Gruppenadresse zum Empfangen der entsprechenden Inhalte informiert;
der Steuerpunkt (110) die mehreren Media-Renderer (131 - 136) über die Multicast-Gruppenadresse informiert; und
die mehreren Media-Renderer (131 - 136) sich der Multicast-Gruppenadresse anschließen, die Multicast-Adresse bestätigen und die entsprechenden Inhalte empfangen.

2. Verfahren nach Anspruch 1, das den Schritt aufweist, in dem der Media-Server (120) das Multicast-Streaming der Inhalte startet, bevor der Steuerpunkt (110) die mehreren Media-Renderer (131 - 136) über die Multicast-Gruppenadresse informiert.

3. Verfahren nach Anspruch 1, das den Schritt aufweist, in dem der Media-Server (120) das Multicast-Streaming der entsprechenden Inhalte nach dem Verlauf einer vorbestimmten Zeit nach dem Informieren des Steuerpunkts (110) über die Multicast-Gruppenadresse startet, so dass die mehreren Media-Renderer (131 - 136) die Multicast-Gruppenadresse bestätigen und dann die entsprechenden Inhalte von dem Steuerpunkt (110) empfangen können.

4. Verfahren nach den Ansprüchen 1, 2 und 3, wobei die Multicast-Gruppenadresse eine RTSP-URL ist, wobei die RTSP-URL die Form von rtsp://ipaddress/path hat.

5. Verfahren nach Anspruch 1, das den Schritt des Beendens des Empfangs der Multicast-Inhalte aufweist, wenn der Aufruf der Aktion 'Leave()' erkannt wird.

6. Multicast-Streaming-Dienstverfahren nach Anspruch 1, das ferner den Schritt des Informierens über eine Multicast-Gruppenadresse, wenn die Multicast-Startaktion erkannt wird, und des Multicast-Streamens entsprechender Inhalte an die Multicast-Adresse unter Verwendung eines RTSP-Servers aufweist.

7. Multicast-Streaming-Dienstverfahren nach Anspruch 1, das mehrere Multicast-Media-Renderer MR (131 - 136) hat, das ferner die Schritte aufweist, wobei:
die mehreren Media-Renderer bestätigen, ob Inhalte in Multicast gesendet werden oder nicht;
Empfangen einer Multicast-Gruppenadresse, wenn das Vorhandensein des Multicasts bestätigt wird; und
Beitreten zu der Multicast-Gruppenadresse, Bestätigen der Multicast-Adresse und Empfangen der entsprechenden Multicast-Inhalte.

8. Multicast-Streaming-Dienstsystem, das einen Media-Server zum Herstellen einer Verbindung mit einem Media-Renderer und zum Übertragen von Media-Daten und einem Media-Renderer zum Empfangen von Media-Daten von dem Media-Server aufweist, **dadurch gekennzeichnet, dass** das Streaming-Dienstsystem aufweist:
einen Media-Server MS (120), der konfiguriert ist, um eine Multicast-Gruppenadresse bereitzustellen und entsprechende Inhalte unter Verwendung eines RTSP-Servers an eine Multicast-Adresse in Multicast zu senden;
mehrere Media-Renderer MR (131 - 136), die konfiguriert sind, um sich dem RTSP-Server anzuschließen, um die Multicast-Adresse zu betätigen, und die Inhalte, die an die Multicast-Adresse gesendet werden, abzuspielen; und
einen Steuerpunkt CP (110), der konfiguriert ist, um die Inhalte die als Multicast gesendet werden sollen, zu bestätigen, um eine Multicast-Startaktion zu dem Media-Server (120) aufzurufen und um die mehreren Media-Renderer (131 - 136) über die Multicast-Gruppenadresse, die von dem Media-Server (120) bereitgestellt wird, zu informieren.

9. System nach Anspruch 8, wobei der Media-Server (120) eingerichtet ist, um den Multicast der entsprechenden Inhalte direkt nach der Übertragung der Multicast-Gruppenadresse an den Steuerpunkt (110) zu starten.

10. System nach Anspruch 8, wobei der Media-Server (120) eingerichtet ist, um den Multicast der entsprechenden Inhalte nach einem Verlauf einer vorbestimmten Zeit seit der Übertragung der Multicast-Gruppenadresse zu starten.

11. System nach den Ansprüchen 8, 9 und 10, wobei die Multicast-Gruppenadresse eine RTSP-URL ist, wobei die RTSP-URL die Form von rtsp://ipaddress/path hat.

12. Multicast-Streaming-Dienstsystem nach Anspruch 8, das einen Media-Server aufweist, der konfiguriert ist, um über eine Multicast-Gruppenadresse zu informieren, wenn die Multicast-Startaktion erkannt wird, und entsprechende Inhalte als Multicast-Streaming unter Verwendung eines RTSP-Servers an die Multicast-Adresse zu senden.

13. Multicast-Streaming-Dienstsystem nach Anspruch 8, das mehrere Media-Renderer aufweist, die konfiguriert sind, um eine Multicast-Gruppenadresse zu empfangen, wenn das Vorhandensein des Multicasts bestätigt wird, um der Multicast-Gruppenadresse beizutreten, um die Multicast-Adresse zu bestätigen und um die entsprechenden Multicast-Inhalte zu empfangen.

14. Multicast-Streaming-Dienstsystem nach Anspruch 13, wobei die mehreren Renderer eingerichtet sind, um den Empfang der Multicast-Inhalte zu beenden, wenn die der Aufruf der Aktion 'Leave()' erkannt wird.

## Revendications

1. Procédé pour un service de streaming en multidiffusion, dans un procédé de contrôle d'un réseau audio vidéo (AV) plug and play universel (UPnP) pour l'exécution d'une transmission en streaming pour lire des médias en ayant un serveur de média (MS) (120), des unités de restitution de média (MR) multiples (131, 132, 133, 134, 135, 136) et un point de commande (CP) (110) commandant le serveur de média (120) et les unités de restitution (131, 132, 133, 134, 135, 136), comprenant l'établissement d'une connexion entre le serveur de média et les unités de restitution de média et la transmission de données de média, **caractérisé en ce que** le procédé comprend les étapes suivantes :
le point de commande (110) confirme du contenu et invoque une action de démarrage de streaming en multidiffusion vers le serveur de média (120);
le serveur de média (120) informe le point de commande (110) d'une adresse de groupe de multidiffusion pour recevoir le contenu correspondant;
le point de commande (110) informe les unités de restitution de média multiples (131-136) de l'adresse de groupe de multidiffusion; et
les unités de restitution de média multiples (131-136) joignent l'adresse de groupe de multidiffusion, confirment l'adresse de multidiffusion et reçoivent le contenu correspondant.

2. Procédé selon la revendication 1, comprenant l'étape dans laquelle le serveur de média (120) démarre le streaming en multidiffusion des contenus avant que le point de commande (110) informe les unités de restitution de média multiples (131-136) de l'adresse de multidiffusion de groupe.

3. Procédé selon la revendication 1, comprenant une étape dans laquelle le serveur de média (120) démarre le streaming en multidiffusion du contenu correspondant après expiration d'un temps prédéterminé après avoir informé le point de commande (110) de l'adresse de groupe de multidiffusion afin que les unités de restitution de média multiples (131-136) puissent confirmer l'adresse de groupe de multidiffusion et ensuite recevoir du point de commande (110) le contenu correspondant.

4. Procédé selon les revendications 1, 2 et 3, dans lequel l'adresse de groupe de multidiffusion est une URL RTSP, l'URL RTPS étant sous la forme rtps://ipaddress/path.

5. Procédé selon la revendication 1, comprenant uneétape de fin de réception du contenu en multidiffusion si une action 'Leave()' est reconnue.

6. Procédé pour un service de streaming en multidiffusion selon la revendication 1, comprenant en outre informer d'une adresse de groupe de multidiffusion si une action de démarrage en multidiffusion est reconnue, et délivrer par streaming en multidiffusion du contenu correspondant à l'adresse de multidiffusion au moyen d'un serveur RTSP.

7. Procédé pour un service de streaming en multidiffusion selon la revendication 1, avec des unités de restitution de média (MR) multiples (131-136), comprenant en outre les étapes suivantes :
les unités de restitution de média multiples confirment si du contenu est multidiffusé ou non;
recevoir une adresse de groupe de multidiffusion si la présence de multidiffusion est confirmée; et
joindre l'adresse de groupe de multidiffusion, confirmer l'adresse de multidiffusion et recevoir le contenu en multidiffusion correspondant.

8. Système de service de streaming en multidiffusion, comprenant un serveur de média pour l'établissement d'une connexion avec une unité de restitution de média multiple et pour la transmission de données de média et une unité de restitution de média multiple pour la réception de données de média à partir d'un serveur de média, **caractérisé en ce que** le système de service de streaming comprend :
un serveur de média (MS) (120) configuré pour fournir une adresse de groupe de multidiffusion et pour multidiffuser du contenu correspondant vers une adresse de multidiffusion au moyen d'un serveur RTSP;
des unités de restitution de média (MR) multiples (131-136) configurées pour joindre le serveur RTSP pour une confirmation de l'adresse de multidiffusion et pour lire le contenu transmis à l'adresse de multidiffusion; et
un point de commande (CP) (110) configuré pour confirmer les contenus à multidiffuser, pour invoquer une action de démarrage de multidiffusion vers le serveur de média (120) et pour informer les unités de restitution de média multiples (131-136) de l'adresse de groupe de multidiffusion fournie par le serveur de média (120).

9. Système selon la revendication 8, dans lequel le serveur de média (120) est agencé de manière à démarrer une multidiffusion du contenu correspondant juste après transmission de l'adresse de groupe de multidiffusion au point de commande (110).

10. Système selon la revendication 8, dans lequel le serveur de média (120) est agencé de manière à démarrer une multidiffusion du contenu correspondant après expiration d'un temps prédéterminé à partir de la transmission de l'adresse de groupe de multidiffusion.

11. Système selon les revendications 8, 9 et 10, dans lequel l'adresse de groupe de multidiffusion est une URL RTSP, l'URL RTSP étant sous la forme rtps://ipaddress/path.

12. Système de service de streaming en multidiffusion selon la revendication 8, comprenant un serveur de média configuré pour informer d'une adresse de groupe de multidiffusion si une action de démarrage de multidiffusion est reconnue et pour délivrer par streaming en multidiffusion du contenu correspondant au moyen d'un serveur RTSP.

13. Système de service de streaming en multidiffusion selon la revendication 8, comprenant des unités de restitution de média multiples configurées pour recevoir une adresse de groupe de multidiffusion si la présence de multidiffusion est confirmée, pour joindre l'adresse de groupe de multidiffusion, pour confirmer l'adresse de multidiffusion et pour recevoir le contenu en multidiffusion correspondant.

14. Système de service de streaming en multidiffusion selon la revendication 13, dans lequel les unités de restitution multiples sont agencées de manière à mettre fin à la réception du contenu en multidiffusion si l'invocation d'une action 'Leave ()' est reconnue.
